# EUROPÄISCHE PATENTSCHRIFT

(11) **EP 1 494 568 B1**
(45) Veröffentlichungstag und Bekanntmachung des Hinweises auf die Patenterteilung: **29.03.2006**
(21) Anmeldenummer: 02807210.6
(22) Anmeldetag: 22.11.2002
(51) Int. Cl.: A47J 43/044, B02C 18/08

(54) **BEARBEITUNGSBEHÄLTER FÜR NAHRUNGSMITTEL**
PROCESSING CONTAINER FOR FOODSTUFFS
RECIPIENT DE TRAITEMENT POUR PRODUITS ALIMENTAIRES

(30) Priorität: 18.04.2002 DE 10217189
(43) Veröffentlichungstag der Anmeldung: 12.01.2005
(73) Patentinhaber: Braun GmbH, 61476 Kronberg (DE)
(72) Erfinder: GILI, Sergi, E-08820 El Prat del Llobregat (Barcelona (ES); SAFONT, Vicenc Residencial Cami d'Alella, E-08039 Montgat-(Barcelona) (ES); RAFOLS, Robert, E-08100 Sant Fost de Campcentelles (ES); HERNANDEZ, Alejandro, E-43700 El Vendrell (Tarragona) (ES); PENARANDA, Mariano, E-08005 Barcelona (ES); LORENZ, Marga, E-08800 Villanova i La Geltru(Barcelona) (ES)
(86) Internationale Anmeldenummer: PCT/EP2002/013116
(87) Internationale Veröffentlichungsnummer: WO 2003/086158

(56) Entgegenhaltungen:
- US-A- 3 094 291
- US-A- 3 434 518
- PATENT ABSTRACTS OF JAPAN vol. 2000, no. 08, 6. Oktober 2000 (2000-10-06) & JP 2000 139729 A (TOSHIBA TEC CORP), 23. Mai 2000 (2000-05-23)
- PATENT ABSTRACTS OF JAPAN vol. 2000, no. 14, 5. März 2001 (2001-03-05) & JP 2000 325242 A (AICHI ELECTRIC CO LTD), 28. November 2000 (2000-11-28)

## Beschreibung

Die Erfindung betrifft einen Bearbeitungsbehälter für Nahrungsmittel gemäß dem Oberbegriff des Patentanspruchs 1.

Ein derartiger Bearbeitungsbehälter ist bereits aus der JP2000-1139729A bekannt. Dort ist an einem Behälterboden ein drehbarer Lagerzapfen angeordnet, auf dessen freies Ende die Werkzeugwelle des Bearbeitungswerkzeuges aufsetzbar ist. Dabei weisen das freie Ende der Werkzeugwelle sowie das freie Ende des Lagerzapfens eine korrespondierende unrunde Ausbildung auf.

Aus der EP-0 221 392 A2 ist ein weiterer Zerkleinerungsbehälter zum Zerkleinern von beispielsweise Petersilie, Zwiebeln, etc. bekannt, der aus einem Deckel und einem vom Deckel verschließbaren Behälter gebildet wird. Der Deckel weist eine Kupplungsvorrichtung auf. Die Kupplungsvorrichtung ist im Behälterinneren mit einer zentrisch angeordneten Welle gekoppelt, die mit ihrem unteren Wellenende am Behälterboden gelagert ist. Die Werkzeugwelle ist bei dieser bekannten Anordnung einfach lose auf einen Lagerstift aufgesetzt, wodurch sie sich ohne weiteres in axialer und Umfangsrichtung verschieben läßt. Am unteren Wellenende ist ferner ein Messer als Bearbeitungswerkzeug vorgesehen. Zum Antrieb des Messers wird die Kupplungsvorrichtung mit dem Arbeitswerkzeug einer Küchenmaschine in Eingriff gebracht. Wird der Antrieb zu dem im Behälter des Zerkleinerungsgerätes vorgesehenen Messers unterbrochen, so läuft dieses aufgrund seiner Massenträgheit noch längere Zeit nach und kann sich insbesondere wenn sich Nahrungsmittel im Behälter befinden aufgrund der dadurch erzeugten vertikalen Kraftkomponente vom Lagerstift lösen. Dies kann zu Verletzungen einer Hand einer Bedienungsperson führen, wenn diese bei noch rotierendem Messer den Deckel von dem Behälter abhebt und in das Behälterinnere eingreift, um das Messer aus dem Behälter zu entfernen.

Ferner ist aus der EP 0 529 287 B1 ein Zerkleinerungsgerät für eine elektrische Küchenmaschine bekannt. Darin ist eine Werkzeugwelle über eine Kupplungsvorrichtung mit einer Antriebswelle verbindbar. Zwischen der Kupplungsvorrichtung und dem Arbeitswerkzeug ist bei diesem Stand der Technik in der Werkzeugwelle eine Bremse ausgebildet, die von einer Feder gesteuert werden kann. Dabei verschiebt die Feder die Werkzeugwelle nach dem Entkoppeln in axialer Richtung, bis am Innenumfang der hohlen Werkzeugwelle angebrachte Bremselemente mit entsprechenden Bremselementen am unteren Wellenlager zusammenwirken und die Werkzeugwelle dadurch abgebremst wird. Das untere Wellenlager ist dabei mit einem komplizierten Rückhaltemechanismus ausgestattet, der die Material- und Montagekosten verteuert.

Schließlich beschreibt die EP 0 856 273 B1 einen Arbeitsbehälter mit Deckel, in dem ein Bearbeitungswerkzeug an einer Werkzeugwelle angeordnet ist. Die Werkzeugwelle ist am Behälterboden und am Deckel drehbar gelagert. Dabei ist im Deckelbereich eine Kupplungsanordnung zum Antrieb der Werkzeugwelle vorgesehen. In der Werkzeugwelle ist eine über eine Feder ansteuerbare Bremse vorgesehen, die nach Entfernen des Behälterdeckels die Drehbewegung des Bearbeitungswerkzeuges stoppt. Das untere Wellenlager weist dabei einen ähnlich aufwendigen Aufbau wie bei der EP 0 529 287 B1 auf.

Nachteil des beschriebenen Standes der Technik sind zum einen aufwendige und komplizierte Lageranordnungen für die Werkzeugwelle, die eine Vielzahl von Bauteilen aufweisen. Hierdurch entstehen hohe Material- und Montagekosten. Ferner können bei den oben genannten Vorrichtungen vom Stand der Technik Nahrungsmittelreste in die Hohlräume im Welleninneren eindringen und, sofern vorhanden, den Bremsmechanismus verschmutzen. Da die hiervon betroffenen Hohlräume zu Reinigungszwecken nur sehr schwer zugänglich sind, können dort Bakterien und Keime entstehen, was bei der Zubereitung von Nahrungsmitteln äußerst unerwünscht ist.

Zwar schlagen die DE 100 13 250 A1 und die EP 1151708 A1 verbesserte Bearbeitungsbehälter für Nahrungsmittel vor, diese weisen jedoch komplizierte Fail-Safe Abschaltmechanismen auf, die beim Abnehmen des Behälterdeckels bzw. bei falscher Montage der Werkzeugwelle ein Rotieren des Bearbeitungswerkzeugs verhindern sollen, um Verletzungen eines Bedieners zu vermeiden.

Der vorliegenden Erfindung liegt daher die technische Aufgabe zugrunde, einen verbesserten Bearbeitungsbehälter für Nahrungsmittel zur Verfügung zu stellen, der die Nachteile des Standes der Technik vermeidet, wobei insbesondere die Sicherheit des Hackmessers bei abgenommenem Deckel erhöht werden soll. Der Bearbeitungsbehälter soll ferner einfach und kostengünstig herstellbar sein.

Diese Aufgabe wird durch einen verbesserten Bearbeitungsbehälter für Nahrungsmittel mit den Merkmalen des Patentanspruchs 1 gelöst. Vorteilhafte Ausgestaltungen und Weiterbildungen der Erfindung werden in den abhängigen Ansprüchen beschrieben. Die erfindungsgemäße Ausführungsform des Bearbeitungsbehälters für Nahrungsmittel gemäß Patentanspruch 1 stellt einen verbesserten Bearbeitungsbehälter für Nahrungsmittel zur Verfügung, der die Nachteile des Standes der Technik vermeidet. Dabei ist die Lageranordnung der Werkzeugwelle einfach und kostengünstig herstellbar. Ein wesentlicher Vorteil der Erfindung ist dabei die besonders günstige Lageranordnung und deren Aufbau. Bei den erfindungsgemäßen Lösungen kann der Lagerzapfen beispielsweise aus poliertem Edelstahl hergestellt sein. Der im wesentlichen längliche Lagerzapfen ist dabei mit seinem unteren Ende am Behälterboden des Bearbeitungsbehälters verankert und ist an seinem freien oberen Ende abgerundet. Der Lagerzapfen kann im wesentlichen zylindrisch mit einer umlaufenden oder unterbrochenen Nut ausgeführt sein. Aber auch andere Ausgestaltungen sind möglich. So kann beispielsweise einen Kugeikopf oder ein Halbkugelkopf vorgesehen sein, der durch einen Stift mit geringerem Durchmesser fortgesetzt ist. Die Lagerbuchse kann im wesentlichen hohlzylindrisch ausgeführt sein und ist als an der Werkzeugwelle innen liegende Lagerstelle vorgesehen. Die Lagerbuchse verschließt den Wellenhohlraum der Werkzeugwelle dabei vollständig. Durch die in die Hinterschneidung des Lagerzapfens hineinragende Rückhalteeinrichtung wird eine in gewissem Maße lose Verbindung geschaffen, die eine freie Rotation der Werkzeugwelle zuläßt, deren axiale Verschiebbarkeit aber derart eingeschränkt ist, daß erst bei Überwindung einer vorgegebenen Abzugskraft das Hackmesser vom Lagerzapfen abnehmbar ist. Im normalen Betrieb, auch wenn der Deckel mit Antriebseinheit bei noch drehendem Messer abgenommen wird, bleibt das Hackmesser sicher auf dem Lagerzapfen eingeklingt. Durch die Rastung wird bei der Montage bzw. beim, Zusammenbau ein vereinfachtes Justieren der Teile zueinander und ein verbesserter Lagersitz erreicht. Ferner spürt der Benutzer beim Einbau bzw. Ausbau der Werkzeugwelle einen Rastwiderstand, was zur Folge hat, daß die Werkzeugwelle nur bewußt mit geringem Kraftaufwand entnommen werden kann und nicht versehentlich beim Hantieren im Bearbeitungsbehälter vom Lagerzapfen rutscht. Nach Entnahme der Werkzeugwelle läßt sich diese und der Bearbeitungsbehälter einfach und vollständig reinigen. Gemäß der Erfindung ist es auch denkbar, daß die Hinterschneidung an der Werkzeugwelle und daß der Klemmring am Lagerzapfen als Ringbund ausgebildet sein können, wobei letzterer dann in die Hinterschneidung elastisch fedemd eingreift. Dabei ist die Rückhalteeinrichtung als Rückhaltering ausgebildet. Der Rückhaltering kann beispielsweise durchgehend oder unterbrochen ausgeführt sein. Als Materialien für den Rückhaltering kommen beispielsweise elastische oder federnde Werkstoffe, wie Kunststoff oder Federblech, in Frage. Es sind aber auch federgelagerte Ringkonstruktionen möglich. Der Rückhaltering kann dabei an der Werkzeugwelle bzw. in der Aufnahme feststehend oder drehend gelagert sein. Ferner kann der Rückhaltering einstückig mit oder getrennt von der Lagerbuchse ausgebildet sein.

Die Ansprüche 2 und 3 stellen vorteilhafte alternative Anordnungen von Rückhalteeinrichtung und Hinterschneidung unter Schutz.

Eine besonders vorteilhafte Weiterbildung ist in Patentanspruch 4 angegeben. Hierdurch wird auf verblüffend einfache Weise eine so genannte "Fail-Safe" Funktion erzielt. Beim Abrutschen der Werkzeugwelle vom Lagerzapfen, beispielsweise, verursacht durch die vertikale Kraftkomponente des Werkzeugs, die beim Abnehmen des Behälterdeckels während des Betriebs durch die Masserotation entsteht, führt diese Materialwahl zu einer Berührung zwischen dem Rückhaltering und dem Lagerzapfen und dadurch zum automatischen Abbremsen der Werkzeugwelle, wenn diese noch eine Restdrehung aufweist. Hierdurch werden Verletzungen des Bedieners durch Hineingreifen in ein sich noch drehendes Werkzeug vermieden. Auch wird hierdurch eine Inbetriebnahme bei nur auf dem Lagerzapfen lose aufgesetztem aber nicht eingerasteter Werkzeugwelle verhindert.

Durch Einsatz eines in Patentanspruch 5 beanspruchten Bauteils wird eine kostengünstige, einfach zu montierende Lösung angeboten. Insbesondere wird hierdurch eine Möglichkeit geschaffen, Zukaufteile zu verwenden, die keinen gesonderten Fertigungsaufwand erfordem.

Eine weitere vorteilhafte Ausführungsform der vorliegenden Erfindung weist die Merkmale des Patentanspruchs 6 auf. Als Werkstoffe kommen dabei beispielsweise Teflon, Polyamid oder Polypropylen oder jeder andere geeignete Kunststoff in Frage. Bei entsprechender Werkstoffwahl für den Lagerzapfen, beispielsweise poliertem rostfreiem Stahl, ist das Gleitlager quasi wartungsfrei. Es ist kein Fetten oder Schmieren erforderlich.

Bei der vorteilhaften Ausführungsform nach Patentanspruch 7 stellt es sich als besonders günstig heraus, daß der teuere Lagervverkstoff nicht für die gesamte Werkzeugwelle bzw. für das gesamte Lagerbauteil verwendet werden muß. Hierdurch können Materialkosten eingespart werden.

Noch eine vorteilhafte Weiterbildung des Patentanspruchs 7 sieht die Merkmale des Patentanspruchs 8 vor. Dabei ist die Montagereihenfolge der Lagerbauteile in der Werkzeugwelle beispielsweise zuerst die Lagerbuchse, dann der Rückhaltering und zuletzt die Rückhaltebuchse. Hierdurch können relativ wenige Bauteile verwendet werden, was zu einer einfachen und kostengünstigen Montage beiträgt.

Auch die vorteilhafte Ausführungsform mit den Merkmalen des Patentanspruchs 9 trägt zur einfachen und kostengünstigen Montage bei, da hierdurch kein Verkleben, Verschweißen oder Verschrauben der zu montierenden Lagerbauteile erforderlich ist. Die Verbindungselemente können dabei beispielsweise aus Vorsprüngen und Vertiefungen oder aus einer Art Verzahnung bestehen.

Schließlich sieht eine weitere vorteilhafte Ausführungsform die Merkmale des Patentanspruchs 10 vor. Hierdurch wird Geräuschbildung und Verschleiß an der Rückhalteeinrichtung im Betrieb vermieden.

Weitere Vorteile der Erfindung sind die geringen Maß- und Formabweichungen.

Weitere Ausgestaltungen und Vorteile der Erfindung werden durch die Beschreibung der Ausführungsbeispiele unter Bezugnahme auf die beigefügten Zeichnungen erläutert. Darin zeigen:
- Fig. 1: eine vorteilhafte Ausführungsform eines Bearbeitungsbehälters für Nahrungsmittel mit einer Lageranordung gemäß der vorliegenden Erfindung im Schnitt;
- Fig. 2: Detail II der vorteilhaften Ausführungsform aus Fig. 1 im Schnitt.

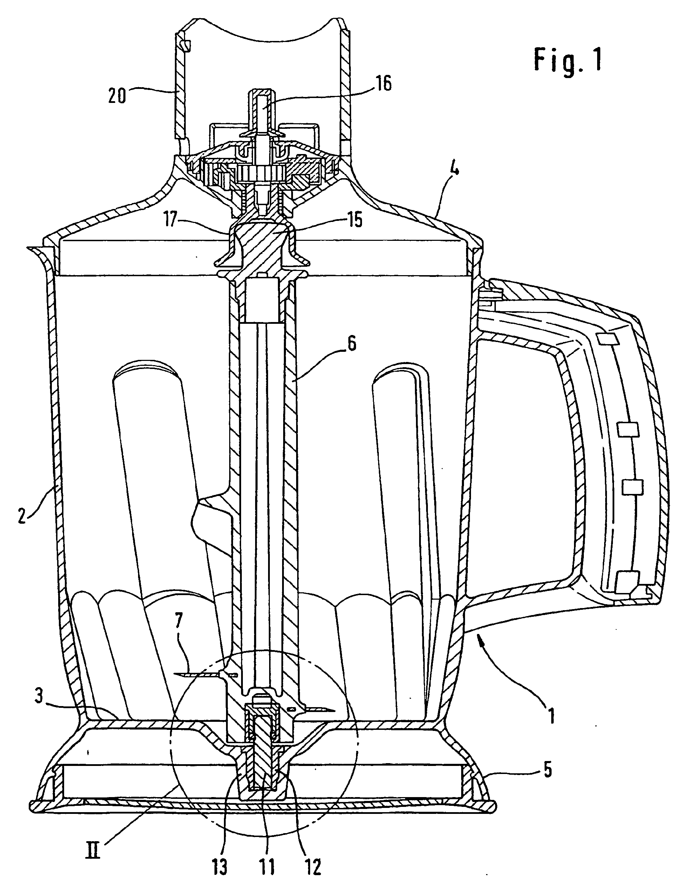

Fig. 1 zeigt eine vorteilhafte Ausführungsform der vorliegenden Erfindung schematisch im Schnitt. Darin ist ein im wesentlichen zylindrischer Bearbeitungsbehälter 1, der eine Behälterwand 2 und einen Behälterboden 3 aufweist, dargestellt, welcher im vorliegenden Fall aus durchsichtigem Kunststoffmaterial hergestellt ist. Der Bearbeitungsbehälter 1 steht auf einem Behälterfuß 5 auf, der mit dem Behälterkörper einstückig verbunden ist und quasi einen Sockel bildet.

Der Bearbeitungsbehälter 1 ist im betriebsbereiten Zustand an seinem oberen Ende durch einen Behälterdeckel 4 verschlossen, wie in Fig. 1 dargestellt. Der Behälterdeckel 4 ist dabei leicht kegelförmig ausgebildet und weist in seinem Zentrum einen zylinderförmigen Fortsatz 20 auf. In diesem Fortsatz 20 ist eine Abtriebswelle 16 aufgenommen. Die Abtriebswelle 16 treibt eine Kupplungsaufnahme 17 an, die in eine Kupplung 15 am oberen Ende einer Werkzeugwelle 6 eingreift. Die Kupplung 15 schließt mit einem umlaufenden Bund ab. Unterhalb der Kupplung 15 erstreckt sich die Werkzeugwelle 6 im wesentlichen als glatter Hohlzylinder aus thermoplastischem Kunststoff. Außerdem ist am unteren Ende der Werkzeugwelle 6 ein Bearbeitungswerkzeug 7 angeordnet, welches im vorliegenden Ausführungsbeispiel aus zwei sichelförmigen Schneiden besteht.

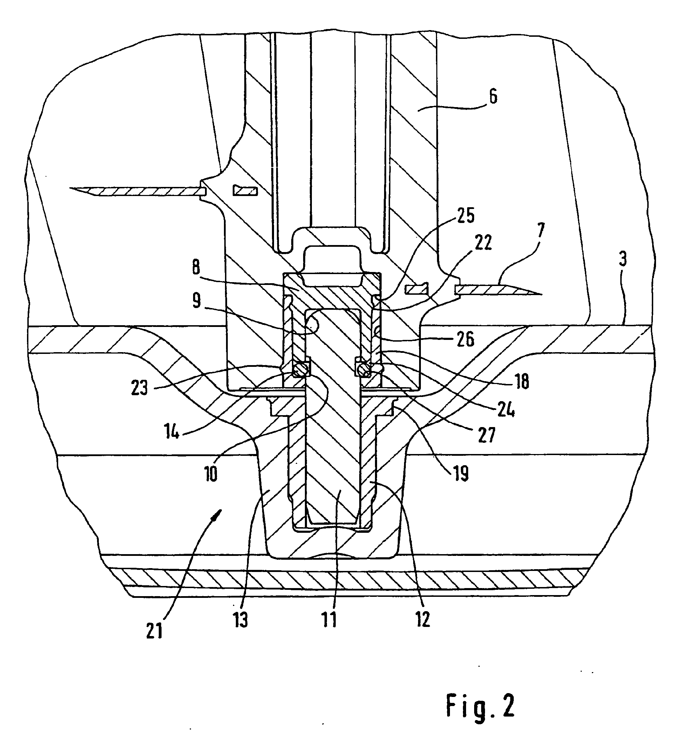

Fig. 2 zeigt eine vergrößerte Detailansicht der Lageranordnung 21 aus Fig. 1.

Konzentrisch zur Abtriebswelle 16 ist im Behälterboden 3 ein Lagerzapfen 11 angeordnet. Der zylindrische Lagerzapfen 11 ist im vorliegenden Fall aus poliertem rostfreiem Stahl hergestellt und ist an seinem oberen Ende halbkugelförmig zu einem Halbkugelkopf 9 abgerundet. Ferner weist der Lagerzapfen 11 im oberen Drittel eine als waagrechte umlaufende Nut 10 ausgebildete Hinterschneidung auf. Der Lagerzapfen 11 ist in einer aus Kunststoff hergestellten Lagerzapfenverankerung 12 aufgenommen, die wiederum in einer in dem Behälterboden 3 des Bearbeitungsbehälters 1 eingeformten Verankerungsaufnahme 13 angebracht und daran verklebt bzw. verschweißt ist. Die Lagerzapfenverankerung 12 weist dabei an ihrem oberen Ende einen umlaufenden Bund 19 auf.

Die mit dem Lagerzapfen 11 konzentrische Werkzeugwelle 6 weist im unteren Endabschnitt eine kurze innen liegende Lagerbuchse 8 aus selbstschmierendem thermoplastischem Kunststoff auf. Die Lagerbuchse 8 ist im wesentlichen als Hohlzylinder ausgebildet, der in eine entsprechende Aussparung 26 am unteren Ende der Werkzeugwelle 6 eingebracht ist. Am werkzeugwellenseitigen Ende weist die Lagerbuchse 8 einen nach außen hervorstehenden umlaufenden Rand 25 auf. Durch diesen Rand 25 wird die Lagerbuchse 8 von der Wand der Aussparung 26 beabstandet. Die Lagerbuchse 8 bzw. die Werkzeugwelle 6 ist konzentrisch auf den Lagerzapfen 11 aufsetzbar. In der Lagerbuchse 8 ist ein nach innen über den Innenumfang der Lagerbuchse 8 hervorstehender umlaufender Wulst vorgesehen. Dieser Wulst ist im vorliegenden Ausführungsbeispiel durch einen O-Ring 14 aus elastischem Material gebildet. Der O-Ring 14 erstreckt sich im Betriebszustand in die umlaufende Nut 10 des Lagerzapfens 11 hinein, berührt diese aber nicht. Der Lagerzapfen 11 mit umlaufender Nut 10 und die Lagerbuchse 8 mit hervorstehendem O-Ring 14 sind Bestandteile der Lageranordnung 21.

In den ringförmigen Hohlraum zwischen der zwischen der Innenwand der Aussparung 26 und der Außenwand der Lagerbuchse 8, ist eine im wesentlichen ringförmige Rückhaltebuchse 18 eingeführt. Die Rückhaltebuchse 18 rastet durch Verbindungselemente 22 und 23 an der Werkzeugwelle 6 und dre Lagerbuchse 8 ein. Es wird so eine formschlüssige Verbindung hergestellt.

An ihrem unteren Ende weist die Rückhaltebuchse 18 einen nach innen hervorstehenden umlaufenden Rückhaltebund 27 auf. Zwischen diesem Rückhaltebund 27 und dem unteren Rand der Lagerbuchse 8 wird so eine Aufnahme 24 für den O-Ring 14 gebildet. In der vorliegenden vorteilhaften Ausführungsform gemäß Fig. 1 und Fig. 2 wird der O-Ring 14 also durch einen Rückhaltebund 27 in der Lagerbuchse 8 in der entsprechenden Aufnahme 24 gehalten und an einer vorgegebenen Position fixiert.

Wird die Werkzeugwelle 6 mit dem Bearbeitungswerkzeug 7 auf den Lagerzapfen 11 aufgesetzt und mit leichtem Druck in Achsrichtung nach unten montiert, dann rastet der O-Ring 14 in die vorhandene Nut 10 des Lagerzapfens 11 ein. Die Werkzeugwelle 6 weist nun eine lose Verbindung mit dem Lagerzapfen 11 im Bearbeitungsbehälter 1 auf, die eine freie Rotation erlaubt. Hierdurch wird verhindert, daß die Werkzeugwelle 6 beim Öffnen des Behälterdeckels 4 vom Lagerzapfen 11 abrutscht.

Ferner bewirkt die erfindungsgemäße Lösung, daß, wenn die Werkzeugwelle 6 nur auf den Lagerzapfen 11 aufgesetzt , nicht aber in der Nut 10 eingerastet ist, die Vorrichtung nicht in Betrieb genommen werden kann. Die Werkzeugwelle 6 kann mit geringem Kraftaufwand auf den Lagerzapfen 11 im Bearbeitungsbehälter 1 aufgesetzt und eingerastet werden. Dabei ist für den Benutzer ein leichter Widerstand beim Einrasten zu spüren. Durch die Rastung wird ein ungewolltes Abrutschen der Werkzeugwelle 6 vom Lagerzapfen 11, beispielsweise beim Herausnehmen von zerkleinerten Nahrungsmitteln, vermieden.

Die erfindungsgemäße Lösung wirkt ferner selbstzentrierend, das heißt, nach dem Einrasten des O-Rings 14 in die Nut 10 des Lagerzapfens 11 kann der Behälterdeckel 4 ohne weiteres aufgesetzt werden. Die Kupplung 15 am oberen Ende der Werkzeugwelle 6 greift automatisch in die Kupplungsaufnahme 17 ein.

Die vertikale Kraftkomponente der Werkzeugwelle 6 die beim Abnehmen des Deckels 4 während des Betriebs durch die Massenrotation entsteht, ist kleiner als die Rastkraft des O-Rings 14 in der Nut 10. Allerdings bewirkt die vertikale Kraftkomponente eine leichte Verschiebung der Werkzeugwelle 6 nach oben, so daß es zwischen dem O-Ring 14 und dem Lagerzapfen 11 zu einer Berührung kommt, die aufgrund der Reibung zwischen O-Ring 14 und Lagerzapfen 11 in kürzester Zeit die Rotation der Werkzeugwelle 6 abbremst. Während des Betriebs berührt der O-Ring 14 den Lagerzapfen 11 nicht, wodurch im Betrieb nur geringer Verschleiß und geringe Reibung entsteht.

## Patentansprüche

1. Bearbeitungsbehälter (1) für Nahrungsmittel mit einer im Behälterinneren angeordneten demontierbaren Werkzeugwelle (6), an der Bearbeitungswerkzeuge (7) angeordnet sind, wobei am unteren Ende der Werkzeugwelle (6) ein Gleitlager ausgebildet ist, das Gleitlager einen am Bearbeitungsbehälter (1) angeordneten Lagerzapfen (11) sowie eine an der Werkzeugwelle (6) angeordnete Lagerbuchse (8) aufweist,
**dadurch gekennzeichnet,**
**daß** Gleitlager und Lagerzapfen (11) über eine Rückhalteeinrichtung (14) in Kombination mit einer Hinterschneidung (10) im montierten Zustand gekoppelt sind, wobei die Rückhalteeinrichtung (14) in die Hinterschneidung (10) ragt und die Rückhalteeinrichtung (14) als Rückhaltering ausgebildet ist.

2. Bearbeitungsbehälter (1) nach Anspruch 1,
**dadurch gekennzeichnet,**
**daß** die Hinterschneidung (10) am Lagerzapfen (11) und die Rückhalteeinrichtung (14) an der Lagerbuchse (8) angeordnet sind.

3. Bearbeitungsbehälter (1) nach Anspruch 1,
**dadurch gekennzeichnet,**
**daß** die Rückhalteeinrichtung (14) am Lagerzapfen (11) und die Hinterschneidung (10) an der Lagerbuchse (8) angeordnet sind.

4. Bearbeitungsbehälter (1) für Nahrungsmittel nach einem der vorangehenden Ansprüche,
**dadurch gekennzeichnet,**
**daß** der Rückhaltering (14) einen höheren Reibwert als die Lagerbuchse (8) aufweist.

5. Bearbeitungsbehälter (1) für Nahrungsmittel nach einem der vorangehenden Ansprüche,
**dadurch gekennzeichnet,**
**daß** der Rückhaltering (14) als O-Ring aus Gummi oder anderem geeigneten elastischen Material ausgebildet ist.

6. Bearbeitungsbehälter (1) für Nahrungsmittel nach einem der vorangehenden Ansprüche,
**dadurch gekennzeichnet,**
**daß** die Lagerbuchse (8) aus thermoplastischem Kunststoffmaterial mit Selbstschmiereigenschaften hergestellt ist.

7. Bearbeitungsbehälter (1) für Nahrungsmittel nach einem der vorangehenden Ansprüche,
**dadurch gekennzeichnet,**
**daß** die Lagerbuchse (8) durch eine Rückhaltebuchse (18) aus einem geeigneten thermoplastischen Kunststoff an der Werkzeugwelle (6) fixiert ist.

8. Bearbeitungsbehälter (1) für Nahrungsmittel nach Anspruch 7,
**dadurch gekennzeichnet,**
**daß** die Lagerbuchse (8) koaxial mit der Rückhaltebuchse (18) derart am unteren Ende der Werkzeugwelle (6) eingepaßt ist, daß eine Aufnahme (24) für den Rückhaltering (14) ausgebildet ist.

9. Bearbeitungsbehälter (1) für Nahrungsmittel nach einem der Ansprüche 7 oder 8,
**dadurch gekennzeichnet,**
**daß** die Rückhaltebuchse (18) durch formschlüssige Verbindungselemente (22, 23) an der Werkzeugwelle (6) und / oder der Lagerbuchse (8) festgehalten ist.

10. Bearbeitungsbehälter (1) für Nahrungsmittel nach einem der vorangehenden Ansprüche,
**dadurch gekennzeichnet,**
**daß** der Rückhaltering (14) und der Lagerzapfen (11) so zueinander angeordnet sind, daß sie sich während des Betriebs nicht berühren.

## Claims

1. A processing container (1) for food, with a detachable tool shaft (6) arranged inside the container, on which shaft are arranged processing tools (7), wherein a sliding bearing is formed a the lower end of the tool shaft (6) and the sliding bearing has a bearing neck (11) arranged on the processing container and a bearing bush (8) arranged on the tool shaft (6),
**characterised in that**
the sliding bearing and bearing neck (11) are coupled by a retaining device (14) combined with an undercut (10) when assembled, wherein the retaining device (14) projects into the undercut (10) and the retaining device (14) is designed as a retaining ring.

2. The processing container (1) according to Claim 1,
**characterised in that**
the undercut (10) is arranged on the bearing neck (11) and the retaining device (14) is arranged on the bearing bush (8).

3. The processing container (1) according to Claim 1,
**characterised in that**
the retaining device (14) is arranged on the bearing neck (11) and the undercut (10) is arranged on the bearing bush (8).

4. Processing container (1) for food according to any one of the preceding claims,
**characterised in that**
the retaining ring (14) has a higher frictional value than the bearing bush (8).

5. Processing container (1) for food according to any one of the preceding claims,
**characterised in that**
the retaining ring (14) is designed as an O ring of rubber or other suitable elastic material.

6. Processing container (1) for food according to any one of the preceding claims,
**characterised in that**
the bearing bush (8) is manufactured from thermoplastic plastic material with self-lubricating properties.

7. Processing container (1) for food according to any one of the preceding claims,
**characterised in that**
the bearing bush (8) is fixed on the tool shaft (6) by a retaining bush (18) of a suitable thermoplastic material.

8. Processing container (1) for food according to Claim 7,
**characterised in that**
the bearing bush (8) is inserted coaxially with the retaining bush (18) at the lower end of the tool shaft (6) so that a recess (24) is formed for the retaining ring (14).

9. Processing container (1) for food according to Claims 7 or 8,
**characterised in that**
the retaining bush (18) is fixed by positively clamped connecting elements (22, 23) to the tool shaft (6) and/or the bearing bush (8).

10. Processing container (1) for food according to any one of the preceding claims,
**characterised in that**
the retaining ring (14) and the bearing neck (11) are arranged in relation to each other so that they do not touch each other during operation.

## Revendications

1. Récipient de mise en oeuvre (1) de produits alimentaires avec un arbre à outils (6) disposé de façon démontable à l'intérieur du récipient, sur lequel sont disposés des outils de mise en oeuvre (7), un palier lisse étant conçu sur l'extrémité inférieure de l'arbre à outils (6), le palier lisse comportant un tourillon (11) disposé sur le récipient de mise en oeuvre (1), ainsi qu'un coussinet (8) disposé sur l'arbre à outils,
**caractérisé en ce que**
à l'état monté, le palier lisse et le tourillon (11) sont couplés en association avec une contre-dépouille (10), par l'intermédiaire d'un dispositif de retenue (14), le dispositif de retenue (14) saillant dans la contre-dépouille (10) et le dispositif de retenue (14) étant conçu sous la forme d'une bague de retenue.

2. Récipient de mise en oeuvre (1) selon la revendication 1,
**caractérisé en ce que** la contre-dépouille (10) est disposée sur le tourillon (11) et le dispositif de retenue (14) est disposé sur le coussinet (8).

3. Récipient de mise en oeuvre (1) selon la revendication 1,
**caractérisé en ce que** le dispositif de retenue (14) est disposé sur le tourillon (11) et la contre-dépouille (10) est disposée sur le coussinet (8).

4. Récipient de mise en oeuvre (1) de produits alimentaires selon l'une quelconque des revendications précédentes,
**caractérisé en ce que** la bague de retenue (14) a une valeur de frottement supérieure à celle du coussinet (8).

5. Récipient de mise en oeuvre (1) de produits alimentaires selon l'une quelconque des revendications précédentes,
**caractérisé en ce que** la bague de retenue (14) est conçue sous la forme d'un joint torique en caoutchouc ou en un autre matériau élastique adapté.

6. Récipient de mise en oeuvre (1) de produits alimentaires selon l'une quelconque des revendications précédentes,
**caractérisé en ce que** le coussinet (8) est fabriqué en une matière thermoplastique avec des caractéristiques autolubrifiantes.

7. Récipient de mise en oeuvre (1) de produits alimentaires selon l'une quelconque des revendications précédentes,
**caractérisé en ce que** le coussinet (8) est fixé sur l'arbre à outils (6) par une douille de retenue (18) en une matière thermoplastique adaptée.

8. Récipient de mise en oeuvre (1) de produits alimentaires selon la revendication 7,
**caractérisé en ce que** le coussinet (8) est ajusté de façon coaxiale avec la douille de retenue (18) sur l'extrémité inférieure de l'arbre à outils (6), de façon à former un logement (24) pour la bague de retenue (14).

9. Récipient de mise en oeuvre (1) de produits alimentaires selon l'une quelconque des revendications 7 ou 8,
**caractérisé en ce que** la douille de retenue (18) est maintenue sur l'arbre à outils (6) et/ou sur le coussinet (8) par des éléments de liaison par complémentarité de forme (22, 23).

10. Récipient de mise en oeuvre (1) de produits alimentaires selon l'une quelconque des revendications précédentes,
**caractérisé en ce que** la bague de retenue (14) et le tourillon (11) sont disposés mutuellement de façon à ne pas se toucher en cours de fonctionnement.
